# EUROPÄISCHE PATENTSCHRIFT

(11) **EP 3 762 737 B1**
(45) Veröffentlichungstag und Bekanntmachung des Hinweises auf die Patenterteilung: **29.07.2026**
(21) Anmeldenummer: 18826753.8
(22) Anmeldetag: 27.12.2018
(51) Int. Cl.: G01S 7/40

(54) **RADARSENSORSYSTEM UND VERFAHREN ZUM BETREIBEN EINES RADARSENSORSYSTEMS**
RADAR SENSOR SYSTEM AND METHOD FOR OPERATING A RADAR SENSOR SYSTEM
SYSTÈME DE CAPTEUR RADAR ET PROCÉDÉ DE FONCTIONNEMENT D'UN SYSTÈME DE CAPTEUR RADAR

(30) Priorität: 08.03.2018 DE 102018203465
(43) Veröffentlichungstag der Anmeldung: 13.01.2021
(73) Patentinhaber: Robert Bosch GmbH, 70442 Stuttgart (DE)
(72) Erfinder: MAYER, Marcel, 89173 Lonsee (DE); LOESCH, Benedikt, 70195 Stuttgart (DE); SCHOOR, Michael, 70195 Stuttgart (DE); STEINHAUER, Matthias, 71711 Steinheim (DE)
(86) Internationale Anmeldenummer: PCT/EP2018/086894
(87) Internationale Veröffentlichungsnummer: WO 2019/170277

(56) Entgegenhaltungen:
- DE-A1- 102012 201 990
- DE-A1- 102013 111 512
- US-A1- 2010 033 375

## Beschreibung

Die Erfindung betrifft ein Radarsensorsystem. Die Erfindung betrifft ferner ein Verfahren zum Betreiben eines Radarsensorsystems. Die Erfindung betrifft ferner ein Computerprogrammprodukt.

### Stand der Technik

Aktuell befindet sich der Markt der Fahrerassistenzsysteme im Umbruch. Während in den letzten Jahren hauptsächlich preisgünstige Sensorik im Vordergrund stand, zeigt sich aktuell der Trend zum hochautonomen Fahren mit wesentlich höheren Ansprüchen an die Sensorik. Es werden bei Fahrzeugen mit einem hohem Grad an Fahrerassistenzfunktionen oder automatisierten Fahrfunktion zunehmend mehr Sensoren zum Steuern und Regeln der Funktionen verbaut. Die in die Fahrzeuge eingebauten Sensoren können beispielsweise Radar-Sensoren oder LIDAR-Sensoren sein und müssen eine möglichst hohe Genauigkeit aufweisen. Durch ein Verwenden von präzisen Sensoren kann die Funktionssicherheit und die Zuverlässigkeit der autonomen oder teilautonomen Fahrfunktionen gewährleistet werden.

Die Offenlegungsschrift US 2010/033375 A1 offenbart ein Kompensationsverfahren einer Temperaturabhängigkeit von Antennenelementen eines Phased-Array-Antennen-Systems.

Die Offenlegungsschrift DE 10 2012 201 990 A1 offenbart einen Radarsensor mit einer Überwachungsschaltung.

### Offenbarung der Erfindung

Es ist eine Aufgabe der vorliegenden Erfindung, ein Radarsensorsystem mit verbesserter Betriebscharakteristik bereitzustellen.

Gemäß einem ersten Aspekt wird die Aufgabe gelöst mit einem Radarsensorsystem, aufweisend:
- wenigstens eine Sendeeinrichtung, wobei sämtliche Sendeeinrichtungen insgesamt wenigstens zwei Sendekanäle aufweisen; und
- wenigstens eine Empfangseinrichtung, wobei sämtliche Empfangseinrichtungen insgesamt wenigstens zwei Empfangskanäle aufweisen;
- jeweils einen Temperatursensor zum Erfassen der Temperaturen der wenigstens einen Sendeeinrichtung und der wenigstens einen Empfangseinrichtung;
- eine Modellierungseinrichtung zum Modellieren wenigstens einer Temperaturabhängigkeit der wenigstens einen Sendeeinrichtung von der wenigstens einen Empfangseinrichtung; und
- eine Kompensationseinrichtung zum Kompensieren der modellierten Temperaturabhängigkeit.

Auf diese Weise wird ein Radarsensorsystem bereitgestellt, welches vorteilhaft eine Kompensation von Signaldriften aufgrund von unterschiedlichen Temperaturen ermöglicht. Eine verbesserte Betriebscharakteristik des Radarsensorsystems ist dadurch vorteilhaft unterstützt.

Gemäß einem zweiten Aspekt wird die Aufgabe gelöst mit einem Verfahren zum Betreiben eines Radarsensorsystems, aufweisend die Schritte:
- Senden von Radarwellen mittels wenigstens einer Sendeeinrichtung, wobei sämtliche Sendeeinrichtungen insgesamt wenigstens zwei Sendekanäle aufweisen;
- Empfangen der an einem Ziel reflektierten Radarwellen mittels wenigstens einer Empfangseinrichtung, wobei sämtliche Empfangseinrichtungen insgesamt wenigstens zwei Empfangskanäle aufweisen;
- Erfassen von Temperaturen der wenigstens einen Sendeeinrichtung und der wenigstens einen Empfangseinrichtung;
- Modellieren wenigstens einer Temperaturabhängigkeit der wenigstens einen Sendeeinrichtung von der wenigstens einen Empfangseinrichtung mittels einer Modellierungseinrichtung; und
- Kompensieren der Temperaturabhängigkeit mittels einer Kompensationseinrichtung während des Sendens und Empfangens.

Vorteilhafte Weiterbildungen des Radarsensorsystems sind Gegenstand von abhängigen Ansprüchen.

Vorteilhafte Weiterbildungen des Radarsensorsystems sind dadurch gekennzeichnet, dass die Modellierungseinrichtung intern oder extern vom Radarsensorsystem angeordnet ist. Dadurch ist vorteilhaft eine hohe Designfreiheit und - vielfalt für das temperaturkompensierte Radarsensorsystem unterstützt.

Weitere vorteilhafte Weiterbildungen des Radarsensorsystems sehen vor, dass die Kompensationseinrichtung intern oder extern vom Radarsensorsystem angeordnet ist. Auch auf diese Weise ist vorteilhaft eine hohe Designfreiheit und -vielfalt für das Radarsensorsystem unterstützt, wobei bei einer internen Anordnung die Kompensationseinrichtung in Hardware ausgebildet sein kann. Bei einer externen Anordnung kann ein Ergebnis der Kompensation an das Radarsensorsystem übergeben werden, wobei eine Temperaturkompensation (z.B. Phasendrehung) z.B. in einer externen Signalverarbeitungseinrichtung durchgeführt wird.

Eine weitere erfindungsgemäße Weiterbildung des Radarsensorsystems zeichnet sich dadurch aus, dass mittels der Modellierungseinrichtung eine temperaturabhängige Phasenverschiebung von Signalen der Empfangseinrichtung und/oder der Sendeeinrichtung und/oder einer HF-Signalerzeugungseinrichtung modellierbar ist. Dadurch können temperaturbedingte Phasenverschiebungen vorteilhaft im Wesentlichen eliminiert werden, wodurch eine Detektionsgüte des Radarsensorsystems verbessert ist.

Eine weitere vorteilhafte Weiterbildung des Radarsensorsystems ist dadurch gekennzeichnet, dass mittels der Modellierungseinrichtung eine lineare Abhängigkeit von Signalen der Sendekanäle der Sendeeinrichtung und/oder von Signalen der Empfangskanäle der Empfangseinrichtung modellierbar ist. Auf diese Weise wird eine Abhängigkeit von Signalen in einem Modell nachgebildet, das weitgehend einer physikalischen Realität entspricht.

Eine weitere vorteilhafte Weiterbildung des Radarsensorsystems zeichnet sich dadurch aus, dass die Kompensationseinrichtung als ein Phasenschieberelement ausgebildet ist. Dadurch kann die Kompensation der Temperaturabhängigkeit vorteilhaft direkt am Baustein in Hardware durchgeführt werden.

Eine weitere erfindungsgemäße Weiterbildung des Radarsensorsystems ist dadurch gekennzeichnet, dass eine Grobkompensation der Temperaturabhängigkeit mittels des Phasenschieberelements und eine Feinkompensation der Temperaturabhängigkeit rechnerisch mittels einer Signalverarbeitungseinrichtung durchführbar sind. Auf diese Weise kann eine Art zweistufige Realisierung des vorgeschlagenen Kompensationsverfahrens realisiert werden, wodurch eine feinstufige Kompensation der Temperaturabhängigkeit realisierbar ist.

Eine weitere vorteilhafte Weiterbildung des Radarsensorsystems ist dadurch gekennzeichnet, dass das Radarsensorsystem mehrere HF-Bauelemente aufweist, wobei alle HF-Bauelemente funktional an ein Synchronisationsnetzwerk angebunden sind, wobei über das Synchronisationsnetzwerk ein HF-Signal einer HF-Signalerzeugungseinrichtung für alle HF-Bauelemente bereitstellbar ist. Auf diese Weise wird vorteilhaft ein multi-kaskadiertes Radarsensorsystem bereitgestellt, welches in vorteilhafter Weise ein temperaturkompensiertes Betriebsverhalten aufweist.

Im Folgenden werden anhand von stark vereinfachten schematischen Darstellungen bevorzugte Ausführungsbeispiele der Erfindung näher erläutert. Dabei zeigt:
- Fig. 1: eine schematische Darstellung einer Ausführungsform eines vorgeschlagenen Radarsensorsystems;
- Fig. 2: eine weitere Ausführungsform eines vorgeschlagenen Radarsensorsystems; und
- Fig. 3: ein prinzipielles Ablaufdiagramm eines vorgeschlagenen Verfahrens zum Betreiben eines Radarsensorsystems.

In den Figuren weisen dieselben konstruktiven Elemente jeweils dieselben Bezugsziffern auf.

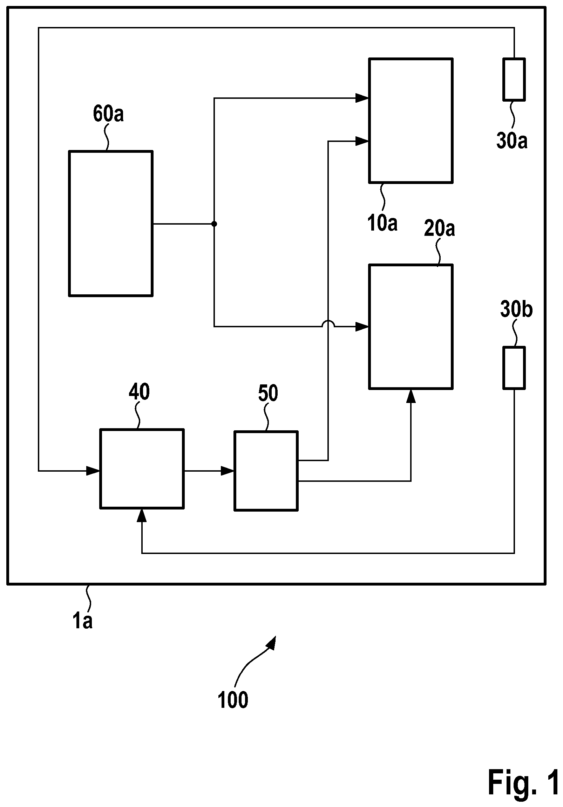

Aktuelle Radarsensoren weisen üblicherweise mehrere HF-Kanäle (Sende- und Empfangskanäle) zum Senden und zum Empfangen von Radarwellen auf. Dabei können im Normalbetrieb alle HF-Kanäle gleichzeitig im Betrieb sein. Fig. 1 zeigt eine prinzipielle Ausführung eines vorgeschlagenen Radarsensorsystems 100. Das Radarsensorsystem 100 besteht dabei aus einem einzelnen HF-Bauelement 1a, vorzugsweise in Form eines MMICs (engl. Monolithic Microwave Integrated Circuit), welches eine Sendeeinrichtung 10a mit mehreren Sendekanälen (nicht dargestellt) und eine Empfangseinrichtung 20a mit mehreren Empfangskanälen (nicht dargestellt) aufweist. Ein HF-Signal (LO-Signal) für die Sendeeinrichtung 10a und für die Empfangseinrichtung 20a wird mittels einer HF-Signalerzeugungseinrichtung 60a bereitgestellt. Erkennbar sind Temperatursensoren 30a, 30b, die Temperaturen der Sendeeinrichtung 10a und der Empfangseinrichtung 20 a erfassen und die ermittelten Temperaturwerte einer Modellierungseinrichtung 40 zuführen.

Mittels der Modellierungseinrichtung 40 werden Temperaturverhalten der Sende- und Empfangseinrichtung modelliert und die Ergebnisse einer Kompensationseinrichtung 50 zugeführt. Mittels der Kompensationseinrichtung 50, die beispielsweise als ein Phasenschieberelement ausgebildet sein kann, werden die temperaturbedingten Driften der Signale der Empfangskanäle der Empfangseinrichtung 20a und der Sendekanäle der Sendeeinrichtung 10a kompensiert. Im Ergebnis ist dadurch vorteilhaft ein temperaturkompensiertes Betriebsverhalten der Sende- und Empfangseinrichtung unterstützt. Beispielsweise können mittels des Modells lineare Temperaturabhängigkeiten der Kanäle modelliert werden, denkbar sind jedoch auch mathematisch komplexere Modelle, z.B. mit Polynomen höherer Ordnung.

In dem von der Modellierungseinrichtung 40 bereitgestellten mathematischen Modell können z.B. Übertragungsfunktionen von relevanten Baugruppen beschrieben werden, zum Beispiel eine Phasenabhängigkeit eines Power Amplifiers (PA) in Abhängigkeit von der Temperatur. Im laufenden Betrieb wird dann die Temperatur bestimmt, und anhand des Modells der Effekt kompensiert.

Ein typischer Verlauf wird beschrieben durch eine Phasenverschiebung, die näherungsweise linear von der Temperatur des Bausteins abhängt. Als Parameter des Modells ist daher die Steigung des genannten linearen Verlaufs wesentlich, sowie als Eingangsgröße die Temperatur. Über das Modell wird dann die Phasendrift bestimmt, die korrigiert werden muss.

Bei mehreren MMICs gibt es die Möglichkeit von temperaturabhängiger Drift zwischen den verschiedenen Bausteinen. Selbst wenn alle MMICs identisches Verhalten zeigen, so kann es durch Temperaturunterschiede der Bausteine zu unterschiedlichen Übertragungsfunktionen (z.B. Amplitude und Phase) verschiedener Baugruppen innerhalb des MMIC kommen (z.B. Verstärker, Mischer). Konventioneller Ansatz ist es, durch ein entsprechendes symmetrisches Design diese Driften, d.h. die Unterschiede zu minimieren. Dies erfordert jedoch aufwändige, zusätzliche Designelemente (z.B. einen zentralen HF-Signalerzeugungsbaustein) und damit zusätzliche Kosten. Mit der Erfindung wird vorteilhaft eine Kompensation der Drift mit geringen bzw. ohne Zusatzkosten ermöglicht.

Bei einem Multi-MMIC-System gibt es entsprechend mehrere Temperaturen und Phasenverschiebungen, so dass die Korrektur ein entsprechend größeres mathematisches Gleichungssystem erfordert.

Das Modell orientiert sich idealerweise anhand von Baugruppen im MMIC bzw. im Gesamtsystem. Dabei können einzelne Gruppen zusammengefasst werden, z.B. eine Kette von Power Amplifier für die HF-Signal-Verteilung im Master, die HF-Signalleitung auf der Leiterplatte sowie die Eingangsschaltung zur HF-Signalaufnahme im Slave-MMIC. Dabei kann es vorteilhaft sein, die Modellierung zusammenzufassen oder zu trennen, je nachdem, wie Abhängigkeiten der Kennlinie sind.

Die Kompensation mittels der Kompensationseinrichtung 50 kann auf mehrere Arten erfolgen. Im Stand der Technik wird die Kompensation direkt im Baustein durchgeführt, d.h. dass zum Beispiel die Sendephase eines Sendesignals mithilfe eines Phasenschieberelements direkt korrigiert wird, wobei dieses Phasenschieberelement von dem Modell gestützt angesteuert wird (z.B. in Abhängigkeit von der Temperatur).

Alternativ kann erfindungsgemäß die Kompensation auch rechnerisch in einer Signalauswertungseinheit (nicht dargestellt) erfolgen, wo das Modell bestimmt wird und entsprechende Signale für Kombinationen von Sende- und Empfangskanälen entsprechend dem Modell kompensiert werden.

Auch eine Kombination beider genannter Ansätze ist erfindungsgemäß denkbar, zum Beispiel eine Durchführung einer Grobkorrektur im MMIC und eine Durchführung einer Feinkorrektur im Rechner. In der Regel ist mittels der Phasenschieberelemente eine Korrektur von Phasenlagen nur in gröberen Schritten, z.B. in 5°- oder 10°-Schritten möglich, wobei ein geschätzter Restfehler in der Signalverarbeitung korrigiert wird.

Die für das Modell notwendigen Kennlinien werden vorzugsweise per Design ermittelt, oder können alternativ durch eine Vermessung (z.B. auf dem Chip, im Werk oder im Sensor) ermittelt werden.

Der Aufbau des Radarsensorsystems kann beispielsweise aus bekannten kostengünstigen Basiskomponenten bestehen. Durch eine Parallelisierung mehrere Bauelemente vom gleichen Typ lässt sich eine Verbesserung der Leistung und der Genauigkeit des Radarsensorsystems realisieren. Darüber hinaus kann durch die Verwendung mehrerer gleichartiger Bauelemente eine Redundanz zum Bereitstellen einer zuverlässigen Funktion der Anordnung ermöglicht sein. Hierdurch kann technisch einfach ein Notbetrieb des Radarsensorsystems umgesetzt werden. Dazu muss aber neben den HF-Komponenten und den Mikrocontrollern auch eine Redundanz bei der Takterzeugung vorhanden sein. Die HF-Komponenten können beispielsweise in Form von MMICs aufgebaute Antennensteuerungen oder Verstärker sein.

Dadurch, dass alle HF-Komponenten von einem gemeinsamen Taktgeber mit einer Nutz- bzw. Basisfrequenz gespeist werden, weist das Radarsensorsystem eine hohe Kohärenz auf. Insbesondere können die unterschiedlichen HF-Bauelemente mit identischer Betriebsfrequenz betrieben werden, wodurch eine redundante und kohärente Taktversorgung von mehreren HF-Bauelementen ermöglicht wird.

Vorzugsweis kann zumindest ein Teil der im Radarsensorsystem verwendeten HF-Bauelemente mit einem Takt bzw. einer Nutzfrequenz versorgt werden. Im Normalbetrieb können alle HF-Bauelemente bzw. Antennensteuerungen des Radarsensorsystems mit demselben Takt von mindestens einem Taktgeber versorgt und somit alle Daten miteinander verrechnet werden.

Üblicherweise wird in einem Radarsensorsystem einem Bauteil die Rolle des Masters, der die Hochfrequenzerzeugung übernimmt, zugeordnet und die anderen HF-Bauelemente werden von diesem mit dem HF- Synchronisationssignal versorgt. Das HF-Synchronisationssignal ist erforderlich, um eine hohe Kohärenz der HF-Bauelemente 1a...1d bereit zu stellen, um eine hohe Winkelauflösung des Radarsensorsystems 100 zu ermöglichen. Dafür werden im Stand der Technik spezialisierte Bausteine für die Erzeugung der Hochfrequenz und für die weitere Signalverarbeitung eingesetzt.

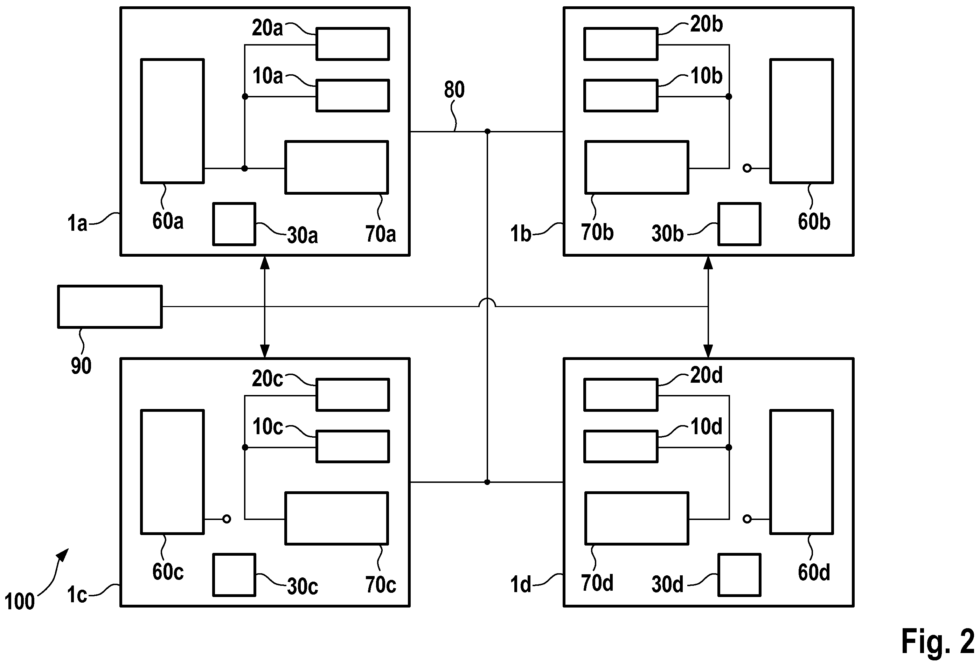

Fig. 2 zeigt eine schematische Darstellung eines derartigen, vorgeschlagenen temperaturkompensierten Radarsensorsystems 100. Das Radarsensorsystem 100 weist vier als MMICs ausgebildete HF-Bauelemente 1a...1d auf Dabei ist die Anzahl vier lediglich beispielhaft, das vorgeschlagene Radarsensorsystem 100 kann auch weniger oder mehr als vier HF-Bauelemente aufweisen. Ferner erkennbar ist ein Synchronisationsnetzwerk 80, an das sämtliche HF-Bauelemente 1a...1d funktional angeschlossen sind und das zum Synchronisieren der HF-Betriebsfrequenz aller HF-Bauelemente 1a...1d verwendet wird. Vorgesehen ist, dass die Gesamtheit aller Sendeeinrichtungen 10a...10n aller HF-Bauelemente 1a...1d zusammen wenigstens zwei Sendekanäle und die Gesamtheit aller Empfangseinrichtungen 20a...20n aller HF-Bauelemente 1a...1d zusammen wenigstens zwei Empfangskanäle aufweist.

Man erkennt, dass lediglich das HF-Bauelement 1a seine HF-Signalerzeugungseinrichtung 60a benutzt, um ein HF-Signal an die Sende- und Empfangsrichtung 10a, 20a zuzuführen. Mittels einer Synchronisationseinrichtung 70a wird das erzeugte HF-Signal allen anderen HF-Bauelementen 1b, 1c, 1d zugeführt.

Dadurch sind die HF-Signalerzeugungseinrichtungen 60b, 60c, 60d der HF-Bauelemente 1b, 1c, 1d funktionslos.

Auf diese Weise wird ein Modell eines kaskadierten Multi-MMIC-Systems realisiert, bei dem in den HF-Bauelementen 1a... 1d Oszillator, Sender und Empfänger sowie notwendige Baugruppen zur HF-Signalverteilung zum Einsatz kommen. Mit diesem Modell und den individuellen Temperaturen der MMICs kann die Drift bestimmt und kompensiert werden. Dadurch können Designelemente zur Symmetrierung entfallen und das Radarsensorsystem 100 kostengünstiger ausgestaltet werden.

Dabei übernimmt des HF-Bauelement 1a im Verbund des Radarsensorsystems 100 die Masterfunktionalität. Auf diese Weise fungiert im Radarsensorsystem 100 das HF-Bauelemente 1a als Master, wobei die drei anderen HF-Bauelemente 1b, 1c, 1d als Slave-HF-Bauelemente fungieren.

Ferner weist das Radarsensorsystem 100 Antennensteuerungen der HF-Bauelemente 1a...1d auf. Der Einfachheit halber sind weitere Komponenten der HF-Bauelemente 1a...1d, die zum Aussenden und zum Empfangen von Radarwellen erforderlich sind, wie beispielsweise Antennen, Verstärker, Oszillatoren, usw. in den Figuren nicht dargestellt.

Man erkennt ferner eine Referenztakteinrichtung 90, die das gesamte Radarsensorsystem 100 mit einem Referenztakt z.B. 50 MHz (z.B. für die Versorgung von A/D-Wandlern, Sequencer, usw.) versorgt.

Das als Master fungierende HF-Bauelement 1a übernimmt im Normalbetrieb des Radarsensorsystems 100 mehrere der folgend genannten Aufgaben:
- Frequenzerzeugung mittels PLL (z.B. 77 GHz) und eventuell eine Takterzeugung (z.B. 50 MHz)
- Ausgabe und Verstärkung des HF-Synchronisationssignals
- Teilweise die Bereitstellung des Sendesignals
- Mischung ins Basisband
- Eventuell AD-Wandlung und Ausgabe der Digitalsignale

Die beiden erstgenannten Aufgaben werden in der Regel ausschließlich vom Master-HF-Bauelement 1a übernommen, wobei die drei letztgenannten Aufgaben von allen beteiligten HF-Bauelementen 1a...1d des Radarsensorsystems 100 übernommen werden.

Im Radarsensorsystem 100 von Fig. 2 bildet somit das HF-Bauelement 1a den Master, während die anderen HF-Bauelemente 1b, 1c, 1d die Slaves repräsentieren. Jedes der HF-Bauelemente 1a...1d verfügt einen Temperatursensor 30a...30d, der entsprechend ausgelesen wird. Das von der Modellierungseinrichtung 40 (nicht dargestellt) bereitgestellte mathematische Modell kann nun z.B. die Strecke vom Master zum Slave modellieren, indem die Abhängigkeit der Synchronisationseinrichtungen 70a...70d des Masters und der Slaves genutzt wird, und damit z.B. den Versatz von Signalen zwischen der Master-Empfangseinrichtung 20a und den Slave-Sendeeinrichtungen 10b...10d zu modellieren und damit zu korrigieren.

Vorteilhaft kann das vorgeschlagene Verfahren nicht nur in einem Radarsensorsystem, sondern auch in jeglichem Produkt mit mehreren HF-Bauelementen eingesetzt werden. Vorzugsweise wird das vorgeschlagene Radarsensorsystem im Automobilbereich eingesetzt.

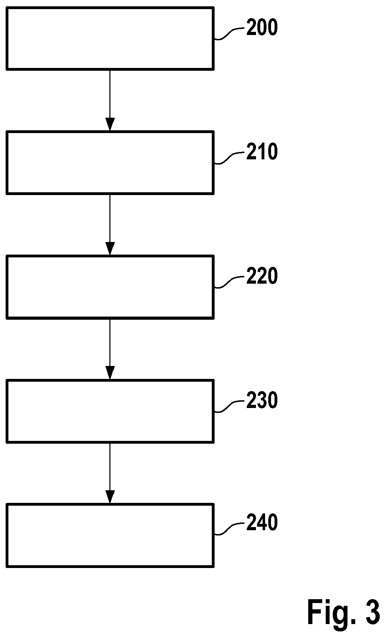

Fig. 3 zeigt ein prinzipielles Ablaufdiagramm eines Verfahrens zum Betreiben eines Radarsensorsystems 100.

In einem Schritt 200 wird ein Senden von Radarwellen mittels wenigstens einer Sendeeinrichtung 10a...10n, wobei sämtliche Sendeeinrichtungen insgesamt wenigstens zwei Sendekanäle aufweisen, durchgeführt.

In einem Schritt 210 wird ein Empfangen der an einem Ziel reflektierten Radarwellen mittels wenigstens einer Empfangseinrichtung 20a...20n. wobei sämtliche Empfangseinrichtungen wenigstens zwei Empfangskanäle aufweisen, durchgeführt.

In einem Schritt 220 wird ein Erfassen von Temperaturen der wenigstens einen Sendeeinrichtung 10a... 10n und der wenigstens einen Empfangseinrichtung 20a...20n durchgeführt.

In einem Schritt 230 wird ein Modellieren wenigstens einer Temperaturabhängigkeit der wenigstens einen Sendeeinrichtung 10a... 10n von der wenigstens einen Empfangseinrichtung 20a...20n mittels einer Modellierungseinrichtung 40 durchgeführt.

In einem Schritt 240 wird ein Kompensieren der Temperaturabhängigkeit mittels einer Kompensationseinrichtung 50 während des Sendens und Empfangens durchgeführt.

Es versteht sich von selbst, dass die Reihenfolge der oben genannten Schritte auch in geeigneter Weise untereinander vertauscht werden kann. Beispielsweise ist es auch möglich, das Modell der Temperaturabhängigkeiten bereits vor dem Senden und Empfangen der Radarwellen zu erstellen.

Vorteilhaft kann das vorgeschlagene Verfahren als eine Software implementiert werden, welche in einem Steuergerät (nicht dargestellt) des Radarsensorsystems 100 abläuft. Vorteilhaft ist auf diese Weise eine einfache Änderbarkeit des Verfahrens unterstützt.

Zusammenfassend werden mit der vorliegenden Erfindung ein Radarsensorsystems und ein Verfahren zum Betreiben des Radarsensorsystems vorgeschlagen, mit dem Temperaturdriften von Komponenten des Radarsensorsystems kompensiert werden können. Mittels einer Modellierung der genannten Temperaturdriften und eines anschließenden Kompensierens derselben kann ein Aufwand zur Beseitigung der Temperaturdriften vorteilhaft gering gehalten werden. Im Ergebnis ist dadurch unterstützt, dass das gesamte Radarsensorsystem kalibriert bzw. temperaturkompensiert ist, wobei zu diesem Zweck gegebenenfalls auch vorgesehen sein kann, einzelne Blöcke/Elemente/- Komponenten nicht individuell zu kompensieren.

## Patentansprüche

1. Radarsensorsystem (100), aufweisend:
- wenigstens eine Sendeeinrichtung (10a...10n), wobei sämtliche Sendeeinrichtungen (10... 10n) insgesamt wenigstens zwei Sendekanäle aufweisen; und
- wenigstens eine Empfangseinrichtung (20a... 20n), wobei sämtliche Empfangseinrichtungen (20a...20n) insgesamt wenigstens zwei Empfangskanäle aufweisen;
- jeweils einen Temperatursensor (30a...30n) zum Erfassen der Temperaturen der wenigstens einen Sendeeinrichtung (10a... 10n) und jeweils einen Temperatursensor (30a...30n) zum Erfassen der Temperaturen der wenigstens einen Empfangseinrichtung (20a...20n);
- eine Modellierungseinrichtung (40) zum Modellieren wenigstens einer Temperaturabhängigkeit der wenigstens einen Sendeeinrichtung (10a... 10n) und der wenigstens einen Empfangseinrichtung (20a...20n), wobei eine temperaturabhängige Phasenverschiebung von Signalen der Empfangseinrichtung (20a...20n) und/oder der Sendeeinrichtung (10a...10n) und/oder einer HF-Signalerzeugungseinrichtung (60a...60n) des Radarsensorsystems (100) modellierbar ist; und
- eine Kompensationseinrichtung (50) zum Kompensieren der modellierten temperaturabhängigen Phasenverschiebung der Signale **dadurch gekennzeichnet, dass** die Kompensationseinrichtung als eine Signalauswertungseinheit oder als eine Kombination aus einem Phasenschieberelement und einer Signalsauswertungseinheit ausgebildet ist.

2. Radarsensorsystem (100) nach Anspruch 1, **dadurch gekennzeichnet, dass** die Modellierungseinrichtung (40) intern oder extern vom Radarsensorsystem (100) angeordnet ist.

3. Radarsensorsystem (100) nach Anspruch 1 oder 2, **dadurch gekennzeichnet, dass** die Kompensationseinrichtung (50) intern oder extern vom Radarsensorsystem (100) angeordnet ist.

4. Radarsensorsystem (100) nach einem der vorhergehenden Ansprüche,
**dadurch gekennzeichnet, dass** mittels der Modellierungseinrichtung (40) eine lineare Abhängigkeit von Signalen der Sendekanäle der Sendeeinrichtung (10a... 10n) und/oder von Signalen der Empfangskanäle der Empfangseinrichtung (20a...20n) modellierbar ist.

5. Radarsensorsystem (100) nach einem der vorhergehenden Ansprüche,
**dadurch gekennzeichnet, dass** eine Grobkompensation der Temperaturabhängigkeit mittels des Phasenschieberelements und eine Feinkompensation der Temperaturabhängigkeit rechnerisch mittels einer Signalverarbeitungseinrichtung durchführbar ist.

6. Radarsensorsystem (100) nach einem der vorhergehenden Ansprüche, **dadurch gekennzeichnet, dass** das Radarsensorsystem (100) mehrere HF-Bauelemente (1a...1n) aufweist, wobei alle HF-Bauelemente (1a...1d) funktional an ein Synchronisationsnetzwerk (80) angebunden sind, wobei über das Synchronisationsnetzwerk (80) ein HF-Signal einer HF-Signalerzeugungseinrichtung (60a...60n) für alle HF-Bauelemente (1a...1d) bereitstellbar ist.

7. Verfahren zum Betreiben eines Radarsensorsystems (100), aufweisend die Schritte:
- Senden von Radarwellen mittels wenigstens einer Sendeeinrichtung (10a...10n), wobei sämtliche Sendeeinrichtungen (10a...10n) insgesamt wenigstens zwei Sendekanäle aufweisen;
- Empfangen der an einem Ziel reflektierten Radarwellen mittels wenigstens einer Empfangseinrichtung (20a...20n), wobei sämtliche Empfangseinrichtungen insgesamt wenigstens zwei Empfangskanäle aufweisen;
- Erfassen von Temperaturen der wenigstens einen Sendeeinrichtung (10a... 10n) und der wenigstens einen Empfangseinrichtung (20a...20n);
- Modellieren wenigstens einer Temperaturabhängigkeit der wenigstens einen Sendeeinrichtung (10a... 10n) und der wenigstens einen Empfangseinrichtung (20a...20n) mittels einer Modellierungseinrichtung (40); und **dadurch gekennzeichnet, dass** das Verfahren den folgenden Schritt umfasst:
- Kompensieren der Temperaturabhängigkeit mittels einer als eine Signalauswertungseinheit oder als eine Kombination aus einem Phasenschieberelement und einer Signalsauswertungseinheit ausgebildeten Kompensationseinrichtung (50) während des Sendens und Empfangens.

## Claims

1. Radar sensor system (100), comprising:
- at least one transmission apparatus (10a...10n), wherein all transmission apparatuses (10...10n) have at least two transmission channels in total; and
- at least one reception apparatus (20a...20n), wherein all reception apparatuses (20a...20n) have at least two reception channels in total;
- a respective temperature sensor (30a...30n) for recording the temperatures of the at least one transmission apparatus (10a...10n) and a respective temperature sensor (30a...30n) for recording the temperatures of the at least one reception apparatus (20a... 20n);
- a modelling apparatus (40) for modelling at least one temperature dependence of the at least one transmission apparatus (10a...10n) and the at least one reception apparatus (20a...20n), wherein a temperature-dependent phase shift of signals of the reception apparatus (20a...20n) and/or the transmission apparatus (10a...10n) and/or an RF signal generation apparatus (60a...60n) of the radar sensor system (100) is able to be modelled; and
- a compensation apparatus (50) for compensating for the modelled temperature-dependent phase shift of the signals, **characterized in that** the compensation apparatus (50) is in the form of a signal evaluation unit or a combination of a phase shift element and a signal evaluation unit.

2. Radar sensor system (100) according to Claim 1, **characterized in that** the modelling apparatus (40) is arranged internally or externally of the radar sensor system (100).

3. Radar sensor system (100) according to Claim 1 or 2, **characterized in that** the compensation apparatus (50) is arranged internally or externally of the radar sensor system (100).

4. Radar sensor system (100) according to one of the preceding claims, **characterized in that** a linear dependence of signals of the transmission channels of the transmission apparatus (10a...10n) and/or of signals of the reception channels of the reception apparatus (20a...20n) is able to be modelled by means of the modelling apparatus (40).

5. Radar sensor system (100) according to one of the preceding claims, **characterized in that** a coarse compensation of the temperature dependence is able to be carried out by means of the phase shift element and a fine compensation of the temperature dependence is able to be carried out computationally by means of a signal processing apparatus.

6. Radar sensor system (100) according to one of the preceding claims, **characterized in that** the radar sensor system (100) has multiple RF components (1a...1n), wherein all RF components (1a...1d) are functionally linked to a synchronization network (80), wherein an RF signal of an RF signal generating apparatus (60a...60n) is able to be provided for all RF components (1a...1d) via the synchronization network (80).

7. Method for operating a radar sensor system (100), comprising the steps of:
- transmitting radar waves by means of at least one transmission apparatus (10a...10n), wherein all transmission apparatuses (10...10n) have at least two transmission channels in total;
- receiving the radar waves reflected at a target by means of at least one reception apparatus (20a...20n), wherein all reception apparatuses have at least two reception channels in total;
- recording temperatures of the at least one transmission apparatus (10a...10n) and the at least one reception apparatus (20a...20n);
- modelling at least one temperature dependence of the at least one transmission apparatus (10a...10n) and the at least one reception apparatus (20a...20n) by means of a modelling apparatus (40); and **characterized in that** the method comprises the following step:
- compensating for the temperature dependence by means of a compensation apparatus (50), which is in the form of a signal evaluation unit or a combination of a phase shift element and a signal evaluation unit, during the transmission and reception.

## Revendications

1. Système de capteurs radar (100), comprenant :
- au moins un dispositif d'émission (10a...10n), tous les dispositifs d'émission (10...10n) comportant au total au moins deux canaux d'émission ; et
- au moins un dispositif de réception (20a...20n), tous les dispositifs de réception (20a...20n) comportant au total au moins deux canaux de réception ;
- un capteur de température (30a...30n) pour détecter les températures de l'au moins un dispositif d'émission (10a...10n) et un capteur de température (30a...30n) pour détecter les températures de l'au moins un dispositif de réception (20a...20n), respectivement ;
- un dispositif de modélisation (40) pour modéliser au moins une dépendance à la température de l'au moins un dispositif d'émission (10a...10n) et de l'au moins un dispositif de réception (20a...20n), un déphasage dépendant de la température de signaux provenant du dispositif de réception (20a...20n) et/ou du dispositif d'émission (10a...10n) et/ou d'un dispositif de génération de signaux HF (60a...60n) du système de capteurs radar (100) pouvant être modélisé ; et
- un dispositif de compensation (50) pour compenser le déphasage dépendant de la température modélisé des signaux, **caractérisé en ce que**
le dispositif de compensation (50) est conçu sous la forme d'une unité d'évaluation de signaux ou sous la forme d'une combinaison d'un élément déphaseur et d'une unité d'évaluation de signaux.

2. Système de capteurs radar (100) selon la revendication 1, **caractérisé en ce que** le dispositif de modélisation (40) est disposé de manière interne ou externe par rapport au système de capteurs radar (100).

3. Système de capteurs radar (100) selon la revendication 1 ou 2, **caractérisé en ce que** le dispositif de compensation (50) est disposé de manière interne ou externe par rapport au système de capteurs radar (100).

4. Système de capteurs radar (100) selon l'une des revendications précédentes, **caractérisé en ce que**, au moyen du dispositif de modélisation (40), une dépendance linéaire de signaux des canaux d'émission du dispositif d'émission (10a...10n) et/ou de signaux des canaux de réception du dispositif de réception (20a...20n) peut être modélisée.

5. Système de capteurs radar (100) selon l'une des revendications précédentes, **caractérisé en ce qu'**une compensation grossière de la dépendance à la température au moyen de l'élément déphaseur et une compensation fine de la dépendance à la température peuvent être effectuées par calcul au moyen d'un dispositif de traitement de signaux.

6. Système de capteurs radar (100) selon l'une des revendications précédentes, **caractérisé en ce que** le système de capteurs radar (100) comporte plusieurs composants HF (1a...1n), tous les composants HF (1a...1d) étant reliés fonctionnellement à un réseau de synchronisation (80), un signal HF d'un dispositif de génération de signaux HF (60a...60n) pouvant être mis à disposition de tous les composants HF (1a...1d) par le biais du réseau de synchronisation (80).

7. Procédé de fonctionnement d'un système de capteurs radar (100), comportant les étapes suivantes consistant à :
- émettre des ondes radar au moyen d'au moins un dispositif d'émission (10a...10n), tous les dispositifs d'émission (10a...10n) comportant au total au moins deux canaux d'émission ;
- recevoir les ondes radar réfléchies sur une cible au moyen d'au moins un dispositif de réception (20a...20n), tous les dispositifs de réception comportant au total au moins deux canaux de réception ;
- détecter des températures de l'au moins un dispositif d'émission (10a...10n) et de l'au moins un dispositif de réception (20a...20n) ;
- modéliser au moins une dépendance à la température de l'au moins un dispositif d'émission (10a...10n) et de l'au moins un dispositif de réception (20a...20n) au moyen d'un dispositif de modélisation (40) ; et **caractérisé en ce que** le procédé comprend l'étape suivante :
- compenser la dépendance à la température au moyen d'un dispositif de compensation (50) conçu sous la forme d'une unité d'évaluation de signaux ou sous la forme d'une combinaison d'un élément déphaseur et d'une unité d'évaluation de signaux pendant l'émission et la réception.
